Europäisches Patentamt

European Patent Office

Office européen des brevets

(11) Veröffentlichungsnummer: **0 387 548**

**A2**

## (12) EUROPÄISCHE PATENTANMELDUNG

(21) Anmeldenummer: **90103199.7**

(22) Anmeldetag: **20.02.90**

(51) Int. Cl.5: **F24H 8/00, F24H 1/28, F23C 3/00**

(30) Priorität: **11.03.89 DE 8903023 U**

(43) Veröffentlichungstag der Anmeldung:
**19.09.90 Patentblatt 90/38**

(84) Benannte Vertragsstaaten:
**AT BE CH DE ES FR GB IT LI NL**

(71) Anmelder: **Viessmann, Hans, Dr.**
**Im Hain 24**
**D-3559 Battenberg/Eder(DE)**

(72) Erfinder: **Viessmann, Hans, Dr.**
**Im Hain 24**
**D-3559 Battenberg/Eder(DE)**

(74) Vertreter: **Wolf, Günter, Dipl.-Ing.**
**Postfach 70 02 45 An der Mainbrücke 16**
**D-6450 Hanau 7(DE)**

(54) **Heizkessel.**

(57) Der Heizkessel besteht aus einem auf einem Sockel (1) angeordneten, wasserführenden Gehäuse (2), in dessen Oberteil (3) eine Brennkammer (4) angeordnet ist, an deren hinteren Hälfte vertikal orientierte Heizgaszüge (5) nach unten, zu einer Abgassammelkammer (6) mit Abgasstutzen (7) führend und senkrecht an die Brennkammerwand (8) anschließend angeordnet sind. Nach der Erfindung ist ein solcher Heizkessel derart ausgebildet, daß die Sockelanschlußfläche (9) für den darauf aufgesetzten, die Heizgaszüge (5) enthaltenden Teil (10) des wasserführenden Gehäuses (2) in bezug auf die Anordnungsseite des Brenners (11) entgegengesetzt abfallend geneigt angeordnet ist.

FIG.1

EP 0 387 548 A2

## Heizkessel

Die Erfindung betrifft einen Heizkessel gemäß Oberbegriff des Hauptanspruches.

Heizkessel der genannten Art sind bspw. nach dem DE-U-86 17 230.1 bekannt und in Benutzung. Ebenso bekannt ist es, daß in Heizkesseln, wenn diese im sogenannten Nieder-oder Tieftemperaturbereich gefahren werden, was heute in der Regel der Fall ist, die Gefahr von korridierenden Kondensatniederschlägen besteht. Diese Gefahr besteht auch bei Heizkesseln der eingangs genannten Art, und zwar insbesondere im Bereich der Brennkammer, der vor dem Anschlußbereich der daran angesetzten und nach unten führenden Heizgaszüge liegt. Einem Abfluß niedergeschlagener Kondensate aus diesem Bereich hat man bisher nicht Rechnung getragen. Um für einen solchen Abfluß zu sorgen, läge es nahe, den betroffenen Bodenbereich der Brennkammer so zu gestalten, daß die Kondensate zu den Mündungen der Heizgaszüge abfließen und durch die Heizgaszüge in die ganz unten am Kessel angeordnete Sammelkammer gelangen können. Eine solche Maßnahme würde jedoch zu einem fertigungstechnisch größeren Aufwand führen, da dann bei geneigter Bodenwand der Brennkammer die Zuschnitte der Heizgaszüge unterschiedlich bzw. unterschiedlich lang gestaltet werden müßten, damit im unteren Bereich, d.h., im Anschluß an die Sammelkammer wieder günstige Anschlußverhältnisse für die Heizgaszüge entstünden.

Der Erfindung liegt demgemäß und ausgehend von einem Heizkessel der eingangs genannten Art die Aufgabe zugrunde, diesen dahingehend zu verbessern, daß unter Beibehaltung günstiger Anschlußverhältnisse und gleicher Zuschnitte für die Heizgaszüge sowohl zur Brennkammer als auch zur nachgeschalteten Sammelkammer auf eine einfache Weise für einen Kondensatabfluß gesorgt sein soll.

Für diese Aufgabe, und zwar jeweils orientiert an der vorgegebenen Kesselgröße, ergeben sich zwei Lösungsmöglichkeiten und zwar nach dem Hauptanspruch und nach dem unabhängigen Anspruch 4. Vorteilhafte Weiterbildungen danach ergeben sich nach den abhängigen Unteransprüchen.

Die erste Lösung ist dabei insbesondere für kleinere Heizkessel mit einem Leistungsbereich von 70 bis 130 KW und die andere Lösung insbesondere für größere Heizkessel mit einem Leistungsbereich von bspw. 150 bis 575 KW bestimmt.

Bei der ersten Lösung bleibt dabei die Kesselkonstruktion praktisch unverändert, und es wird lediglich in die Gestaltung des Sockels eingegriffen, der das wasserführende Gehäuse des Heizkessels trägt. Für diese Gestaltung ist erfindungsgemäß maßgebend, daß die Sockelanschlußfläche für den darauf aufgesetzten, die Heizgaszüge enthaltenden Teil des wasserführenden Gehäuses in bezug auf die Anordnungsseite des Brenners entgegengesetzt abfallend geneigt angeordnet ist. An der vorteilhaft senkrecht einander zugeordneten Anordnung der Heizgaszüge zum betreffenden Bereich der Brennkammerwand ändert sich dabei nichts und der Einlauf der Heizgaszüge in die Sockelanschlußfläche bleibt ebenfalls senkrecht erhalten, wobei aber die gesamte Brennkammer eine Neigung erfährt, die das ggf. anfallende Kondensat zu den Einmündungen der Heizgaszüge abfließen läßt. Da die Sockelanschlußfläche entsprechend geneigt zur Bodenanschlußfläche des Sockels verläuft, kann der Sockel unter ganzflächiger Bodenhaftung seine bisher übliche Trag- und Anschlußfunktion voll übernehmen, was bspw. dann nicht der Fall wäre, wenn man die vorerwähnte und nur durch die spezielle Sockelgestaltung erreichbare Kesselneigung dadurch erzielen wollte, daß man den Sockel mit unterschiedlich langen Standfüßen oder mit einstellbaren Standfüßen versieht. Abgesehen von gestalterischen Schwierigkeiten für das Kesselumschließungsgehäuse im bodennahen Bereich wurde eine derartige Aufstellung des Kessels unter ungünstigen Umständen zumindest zu einer gewissen Instabilität führen, zumal bei derartigen Kesseln der eingangs genannten Art mit einer gewissen Kopflastigkeit durch die in bezug auf den Anschluß der Heizgaszüge spezielle Anordnung der Brennkammer gerechnet werden muß, die dadurch ein ziemlich stark seitlich auskragendes Teil des ganzen Kessels bildet.

Bei der zweiten Lösung, die, wie erwähnt, insbesondere für Heizkessel mit größeren Abmessungen aber gleichem Konstruktionsprinzip vorgesehen ist, wird eine solche Schrägstellung des Heizkessels durch die vorerwähnte Neigung der Anschlußfläche bzw. besonderen Gestaltung des Sockels vermieden, die sonst in Rucksicht auf die größeren Abmessungen bei Schrägstellung zu Einbauschwierigkeiten des Kessels in relativ niedrigen Installationsräumen führen könnte. Auch hierbei bleibt die fertigungstechnisch günstige Verbindung zwischen Heizgaszügen, Brennkammer und Sammelkammer erhalten, wobei jedoch die gestellte und insoweit gleiche Aufgabe dadurch gelöst wird, daß der vor dem Anschlußbereich der Heizgaszüge befindliche Teil der Brennkammer in Form eines zur Brennerseite hin konvergierenden Kegelstumpfes ausgebildet ist. Vorteilhaft ergibt sich dadurch bis zu den Einmündungen der Heizgaszüge hin eine geneigte Abflußfläche für evtl. auftretendes Kondensat, wobei es natürlich am günstigsten ist, den ganzen Bereich des auskragenden Teiles der Brennkammer konisch zu gestalten, als nur die bodenseitige Fläche, an der sich das Kondensat im wesentlichen niederschlagen bzw. sammeln würde. Um nicht die Wandung des den Kegelstumpf umgebenden Teiles des wasserführenden Ge häuses ebenfalls hinsichtlich der Konizität entsprechend zuschneiden zu müssen, wird dieser den Kegelstumpf umgebende Teil des wasserführenden Gehäuses vorteilhaft zylindrisch ausgebildet.

Die Heizgaszüge sind in beiden Fällen vorteilhaft als Heizgaszugtaschen ausgebildet, die quer zur Längsachse an den betreffenden Bereich der Brennkammerwand angeschlossen sind. Solche Taschen sind zwar an sich bekannt, im vorliegenden Fall gezielter Ausbildung des Kessels zwecks Kondensatablaufes gewinnen derartig quergestellte Taschen aber insofern an Bedeutung, als ablaufendes Kondensat bereits schon in die erste, brennerseitig am nächsten liegende Tasche einfließen kann und weiter hintenliegende Bereiche gar nicht erst mit Kondensat belastet werden.

Der erfindungsgemäße Heizkessel wird nachfolgend anhand der zeichnerischen Darstellung von Ausführungsbeispielen näher erläutert.

Es zeigt schematisch

Fig. 1 einen Längsschnitt durch eine Ausführungsform des Heizkessels längs Linie I-I in Fig. 2;

Fig. 2 einen Querschnitt durch den Heizkessel gemäß Fig. 1 längs Linie II-II;

Fig. 3 einen Längsschnitt längs Linie III-III in Fig. 4 durch einen Heizkessel mit prinzipiell gleicher Bauart aber anderer Ausführungsform und

Fig. 4 einen Querschnitt längs Linie IV-IV durch den Heizkessel gemäß Fig. 3.

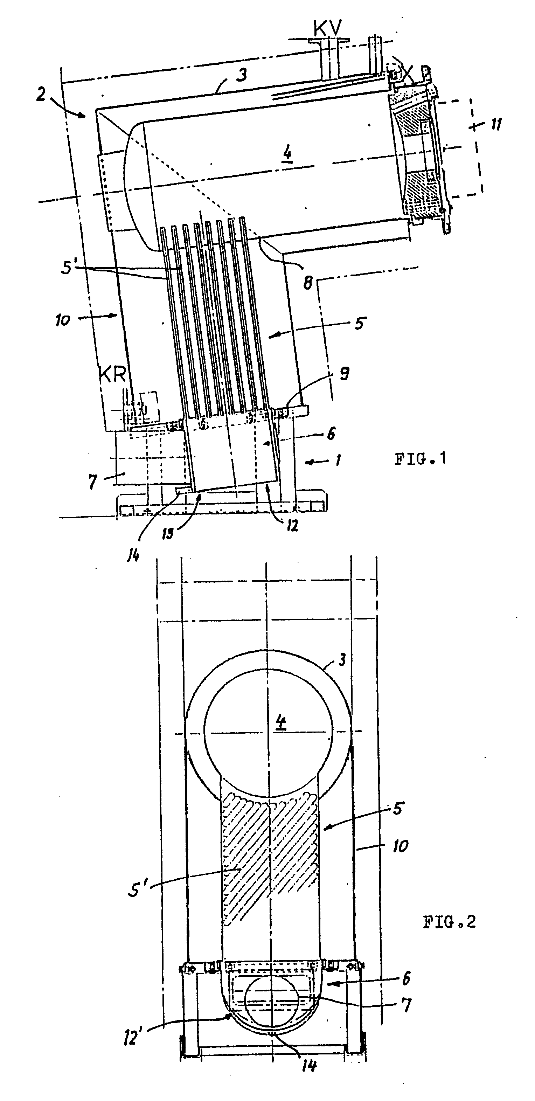

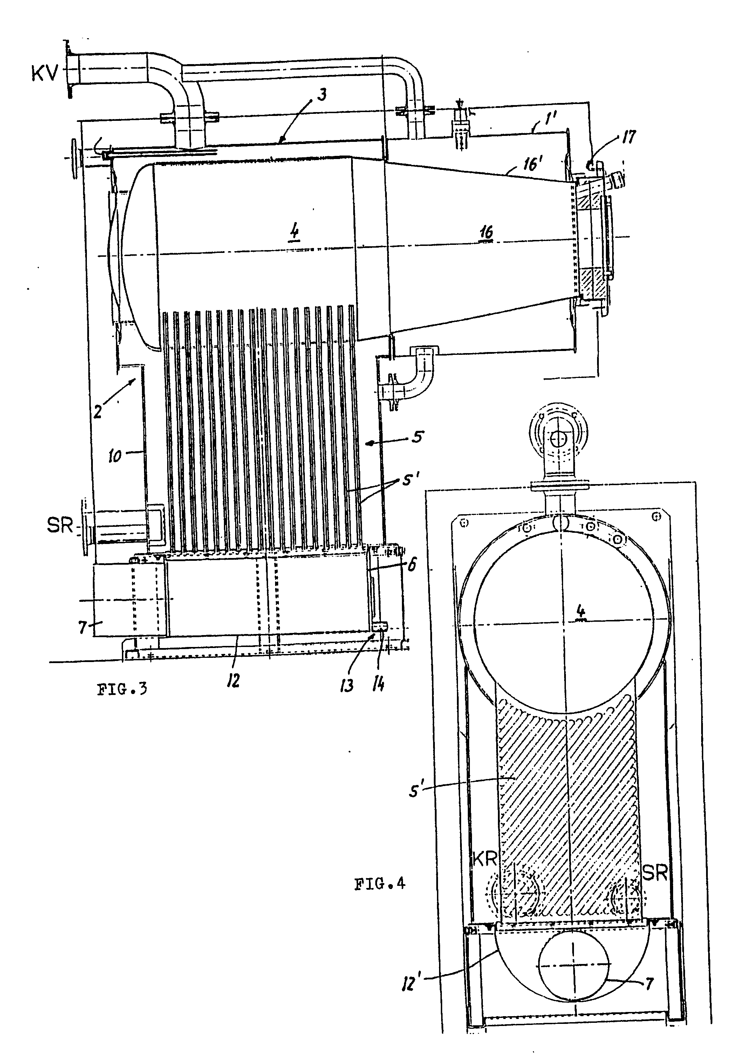

Für gleiche Teile der beiden Ausführungsformen nach den Fig. 1, 3 sind entsprechende Bezugszeichen benutzt. Ge meinsam ist beiden Ausführungsformen, daß diese aus einem auf einem Sockel 1 angeordneten, wasserführenden Gehäuse 2 bestehen, in dessen Oberteil 3 eine Brennkammer 4 angeordnet ist, an deren hinteren Hälfte vertikal orientierte Heizgaszüge nach unten, zu einer Abgassammelkammer 6 mit Abgasstutzen 7 führend und senkrecht an die Brennkammerwand anschließend, angeordnet sind.

Bei der Ausführungsform nach Fig. 1, 2 ist maßgebend, daß die Sockelanschlußfläche 9 für den darauf aufgesetzten, die Heizgaszüge 5 enthaltenden Teil 10 des wasserführenden Gehäuses 2 in bezug auf die Anordnungsseite des Brenners 11 entgegengesetzt abfallend geneigt angeordnet ist. Der Boden 12 der Sammelkammer 6 kann sich dabei parallel zur Sockelanschlußfläche 9 erstrekken und ist dabei an der tiefsten Stelle 13 der Sammelkammer 6 mit einem Kondensatabflußanschluß 14 versehen. Durch die Parallelität des Bodens 12 zur Sockelanschlußfläche 9 ergibt sich automatisch eine entsprechende Neigung des Bodens 12 zur tiefsten Stelle 13 hin. Wie aus Fig. 2 ersichtlich, wird jedoch vorteilhaft die an der Anschlußfläche 9 angeordnete Sammelkammer 6 mit einem halbzylindrischen Boden 12' versehen, wie dies aus Fig. 2 ersichtlich ist, und dessen Längsachse 15 erstreckt sich dabei parallel zur Anschlußfläche 9. Aus den Heizgaszügen 5 abtropfendes Kondensat oder unmittelbar anfallendes Kondensat sammelt sich vorteilhaft durch diese Ausbildung direkt längs der tiefstliegenden Mantellinie des Bodens und gelangt von da aus in den dort ebenfalls wiederum am an der tiefsten Stelle 13 angeordneten Kondensatabfluß 14.

Wie aus Fig. 3 ersichtlich, liegt bei diesem Heizkessel, der insbesondere für solche mit größeren Abmessungen bzw. Leistungen bestimmt ist (die größte Länge bezüglich des auskragenden Oberteiles kann dabei durchaus ca. 2 m betragen!), liegt keine Schrägstellung des Heizkessels vor, hierbei ist aber der vor dem Anschlußbereich der Heizgaszüge 5 befindliche Teil 16 der Brennkammer 4 in Form ei nes zur Brennerseite hin konvergierenden Kegelstumpfes 16 ausgebildet, der gewährleistet, daß dort anfallendes Kondensat ohne weiteres zu den aus den vorerwähnten Gründen vorteilhaft als Taschen ausgebildeten Heizgaszügen 5 abfließen kann. Diese Ausbildung hat gleichzeitig den Vorteil, daß der brennerseitige Verschluß 17 der Brennkammer entsprechend kleiner gehalten werden kann. Zwecks fertigungstechnischer Vereinfachung ist der den Kegelstumpf 16' umgebende Teil 1' des wasserführenden Gehäuses 2 zylindrisch ausgebildet. Da bei dieser Ausführungsform keine Neigung des Kessels vorliegt, ist der Boden 12 der Sammelkammer 6 geneigt angeordnet, wobei sich an der tiefsten Stelle 13 der Sammelkammer 6 ein Kondensatabfluß 14 befindet. Auch hierbei kann der Boden 12' der Sammelkammer 6, wie beim Ausführungsbeispiel gemäß Fig. 1 näher erläutert, halbzylindrisch ausgebildet werden. In Rücksicht auf den Kondensatanfall, und dies gilt für beide Ausführungsformen, wird die Wand 8 der Brennkammer 4 mindestens im unteren, heizgaszugseitigen Bereich doppelschalig ausgebildet.

## Ansprüche

1. Heizkessel, bestehend aus einem auf einem Sockel (1) angeordneten, wasserführenden Gehäuse (2), in dessen Oberteil (3) eine Brennkammer (4) angeordnet ist, an deren hinteren Hälfte vertikal orientierte Heizgaszüge (5) nach unten, zu einer Abgassammelkammer (6) mit Abgasstutzen (7) führend und senkrecht an die Brennkammerwand (8) anschließend angeordnet sind,

**dadurch gekennzeichnet,**
daß die Sockelanschlußfläche (9) für den darauf aufgesetzten, die Heizgaszüge (5) enthaltenden Teil (10) des wasserführenden Gehäuses (2) in bezug auf die Anordnungsseite des Brenners (11) entgegengesetzt abfallend geneigt angeordnet ist.

2. Heizkessel nach Anspruch 1,
**dadurch gekennzeichnet,**
daß der Boden (12) der Sammelkammer (6) sich parallel zur Sockelanschlußfläche (9) erstreckend und an der tiefsten Stelle (13) der Sammelkammer (6) ein Kondensatabflußanschluß (14) angeordnet ist.

3. Heizkessel nach Anspruch 1,
**dadurch gekennzeichnet,**
daß die an der Anschlußfläche (9) angeordnete Sammelkammer (6) mit einem halbzylindrischen Boden (12') versehen und dessen Längsachse (15) sich parallel zur Anschlußfläche (9) erstreckend angeordnet und die Sammelkammer (6) an der tiefsten Stelle (13) mit einem Kondensatabflußanschluß (14) versehen ist.

4. Heizkessel, bestehend aus einem auf einem Sockel (1) angeordneten, wasserführenden Gehäuse (2), in dessen Oberteil (3) eine Brennkammer (4) angeordnet ist, an deren hinteren Hälfte vertikal orientierte Heizgaszüge (5) nach unten, zu einer Abgassammelkammer (6) mit Abgasstutzen (7) führend und senkrecht an die Brennkammerwand (8) anschließend, angeordnet sind,
**dadurch gekennzeichnet,**
daß der vor dem Anschlußbereich der Heizgaszüge (5) befindliche Teil (16) der Brennkammer (4) in Form eines zur Brennerseite hin konvergierenden Kegelstumpfes (16') ausgebildet ist.

5. Heizkessel nach Anspruch 4,
**dadurch gekennzeichnet,**
daß der den Kegelstumpf (16') umgebende Teil (1') des wasserführenden Gehäuses (2) zylindrisch ausgebildet ist.

6. Heizkessel nach Anspruch 4 oder 5,
**dadurch gekennzeichnet,**
daß der Boden (12) der Sammelkammer (6) geneigt und an der tiefsten Stelle (13) der Sammelkammer (6) ein Kondensatabfluß (14) angeordnet ist.

7. Heizkessel nach Anspruch 6,
**dadurch gekennzeichnet,**
daß der Boden (12') der Sammelkammer (6) halbzylindrisch ausgebildet ist.

8. Heizkessel nach einem der Ansprüche 1 bis 7,
**dadurch gekennzeichnet,**
daß die Wand (8) der Brennkammer (4) mindestens im unteren, heizgaszugseitigen Bereich doppelschalig ausgebildet ist.

9. Heizkessel nach einem der Ansprüche 1 bis 8,

**dadurch gekennzeichnet,**
daß die Heizgaszüge (5) in Form von Heizgaszugtaschen (5') ausgebildet und diese quer zur Brennerkammerlängsachse (4') angeordnet sind.

FIG.1

FIG.2

KV

3

1'

17

16'

16

4

2

10

5

S'

SR

6

7

12

13    14

FIG.3

4

S'

KR

SR

FIG.4

12'

7